# EUROPEAN PATENT APPLICATION

(11) **EP 4 764 149 A1**
(43) Date of publication of application: **24.06.2026**
(21) Application number: 25226348.8
(22) Date of filing: 22.12.2025
(51) Int. Cl.: E21B 17/10, F16L 3/22, F16L 3/223

(54) **A CONDUIT SEPARATOR ASSEMBLY AND PROCESS FOR USING THE SAME**

(30) Priority: 23.12.2024 US 202463737984 P; 18.12.2025 US 202519424300
(71) Applicant: Koil Energy Solutions, Inc., Houston, TX 77073 (US)
(72) Inventor: FIELDS, Michael Shane, Conroe, 77303 (US); STUCKEY, Stanley O Neil Jr., Cleveland, 77327 (US)
(74) Representative: Papula Oy

(57) **Abstract**

A conduit separator assembly and process for using same. The conduit separator assembly can include a centralizer, a first outer part, a second outer part, and a central axle. The centralizer can define a plurality of radial conduit slots. The first outer part can define a plurality of tangential conduit slots. The second outer part can define a plurality of tangential conduit slots. The central axle can be positioned within a central bore defined by the centralizer, a central bore defined by the first outer part, and a central bore defined by the second outer part. The centralizer can be positioned between the first outer part and the second outer part.

## Description

### CROSS-REFERENCE TO RELATED APPLICATION

This application claims priority to U.S. Provisional Patent Application No. 63/737,984 dated December 23, 2024, which is incorporated by reference herein.

### FIELD

Embodiments described generally relate to conduit separator assemblies and processes for using same. More particularly, such embodiments relate to conduit separator assemblies configured to arrange fluid conduits in a matrix configuration and processes for using same.

### BACKGROUND

In the oil and gas, and particularly the subsea oil and gas industry, it is sometimes necessary to maintain a plurality of conduits in a particular orientation with respect to one another while the plurality of conduits are deployed at a subsea location. The plurality of conduits are often referred to as flying leads or umbilicals that can be assembled and tested at an onshore location, for example a workshop, placed onto a deployment system, and then deployed to the subsea location from a vessel. Assembling the plurality of conduits into a flying lead or umbilical while maintaining a radial orientation and separation from one another can be challenging, time consuming, and hence an expensive operation.

There is a need, therefore, for improved conduit separator assemblies and process for using same.

### SUMMARY

Conduit separator assemblies and a process for using same are provided. In some embodiments, the conduit separator assembly can include a centralizer that defines a plurality of radial conduit slots, a first outer part that defines a plurality of tangential conduit slots, a second outer part that defines a plurality of tangential conduit slots, and a central axle positioned within a central bore defined by the centralizer, a central bore defined by the first outer part, and a central bore defined by the second outer part, wherein, the centralizer is positioned between the first outer part and the second outer part.

In another embodiment, the conduit separator assembly can include a centralizer that defines a plurality of radial conduit slots, a first outer part that defines a plurality of tangential conduit slots, a second outer part that defines a plurality of tangential conduit slots, and a securing member. The centralizer, the first outer part and the second outer part can each define a central bore therethrough and a securing bore therethrough. The securing member can be configured to be positioned within the securing bore defined by the centralizer, the securing bore defined by the first outer part, and the securing bore defined by the second outer part. The central bore defined by the centralizer, the central bore defined by the first outer part and the central bore defined by the second outer part are configured to receive an elongated central tension member therethrough.

A process for securing a plurality of conduits at a distance from one another with a conduit separator assembly can include providing a conduit separator assembly wherein the conduit separator assembly comprises a centralizer that defines a plurality of radial conduit slots, a first outer part that defines a plurality of tangential conduit slots, a second outer part that defines a plurality of tangential conduit slots, and a central axle positioned within a central bore defined by the centralizer, a central bore defined by first outer part, and a central bore defined by the second outer part. The centralizer can be positioned between the first outer part and the second outer part. The process can include positioning the first outer part and the second outer part in an open position relative to the centralizer, positioning each conduit within the corresponding radial slot defined by the centralizer, and positioning the first outer part and the second outer part in the closed position.

### BRIEF DESCRIPTION OF THE DRAWINGS

The various aspects and advantages of the preferred embodiment of the present invention will become apparent to those skilled in the art upon an understanding of the following detailed description of the invention, read in light of the accompanying drawings which are made a part of this specification.
Figure 1 depicts a perspective view of an illustrative conduit separator assembly in a unassembled state, according to one or more embodiments described.
Figure 2 depicts a perspective view of the conduit separator assembly shown in Figure 1 in an assembled state.
Figure 3 depicts an end elevation view of the conduit separator assembly shown in Figure 1 in an assembled and closed configuration.
Figure 4 depicts a side elevation view of the conduit separator assembly shown in Figure 1 in the assembled and closed configuration.
Figure 5 depicts an end elevation view of the conduit separator assembly similar to the one shown in Figure 1 in an assembled and open configuration, according to one or more embodiments described.
Figure 6 depicts a side elevation view of the conduit separator assembly shown in Figure 5 in the assembled and open configuration.
Figure 7 depicts a perspective view of another illustrative conduit separator assembly that includes a conduit clamp with the conduit separator assembly in an assembled and closed configuration positioned about a plurality of conduits, according to one or more embodiments described.
Figure 8 depicts a perspective view of another illustrative conduit separator assembly in an assembled and closed configuration, according to one or more embodiments described.

### DETAILED DESCRIPTION

A detailed description will now be provided. Each of the appended claims defines a separate invention, which for infringement purposes is recognized as including equivalents to the various elements or limitations specified in the claims. Depending on the context, all references to the "invention", in some cases, refer to certain specific or preferred embodiments only. In other cases, references to the "invention" refer to subject matter recited in one or more, but not necessarily all, of the claims. It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the Figures. Moreover, the formation of a first feature over or on a second feature in the description that follows includes embodiments in which the first and second features are formed in direct contact and also includes embodiments in which additional features are formed interposing the first and second features, such that the first and second features are not in direct contact. The exemplary embodiments presented below may be combined in any combination of ways, i.e., any element from one exemplary embodiment may be used in any other exemplary embodiment, without departing from the scope of the disclosure. The figures are not necessarily drawn to scale and certain features and certain views of the figures can be shown exaggerated in scale or in schematic for clarity and/or conciseness.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Also, the naming convention used herein is not intended to distinguish between components that differ in name but not function. Furthermore, in the following discussion and in the claims, the terms "including" and "comprising" are used in an open-ended fashion, and thus should be interpreted to mean "including, but not limited to."

Further, the term "or" is intended to encompass both exclusive and inclusive cases, i.e., "A or B" is intended to be synonymous with "at least one of A and B," unless otherwise expressly specified herein. The indefinite articles "a" and "an" refer to both singular forms (i.e., "one") and plural referents (i.e., one or more) unless the context clearly dictates otherwise. The terms "up" and "down"; "upward" and "downward"; "upper" and "lower"; "upwardly" and "downwardly"; "above" and "below"; and other like terms used herein refer to relative positions to one another and are not intended to denote a particular spatial orientation since the apparatus and methods of using the same may be equally effective at various angles or orientations.

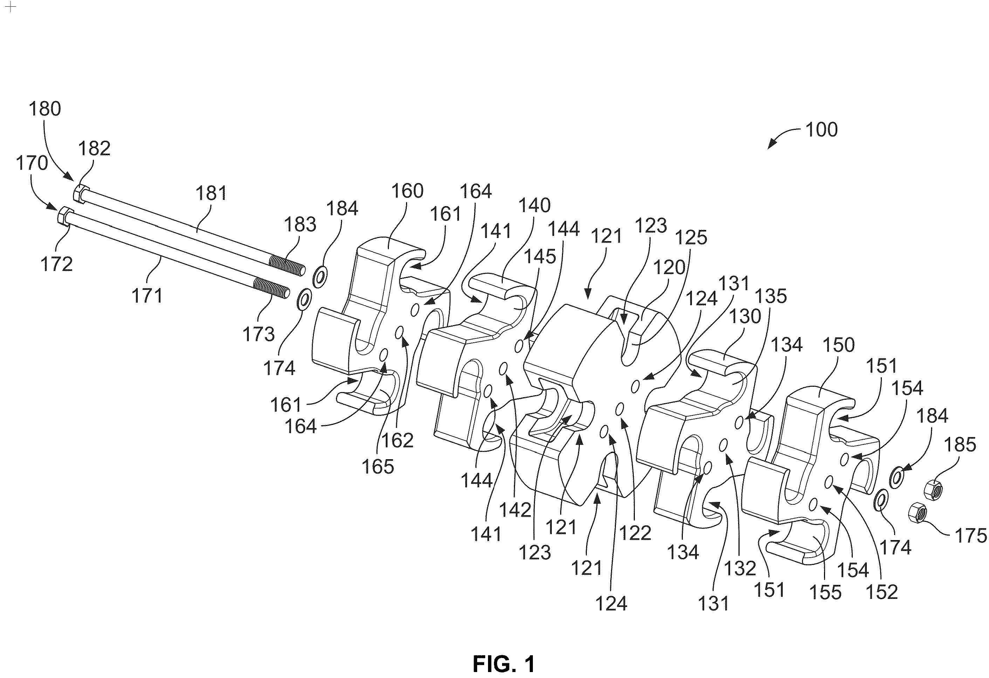

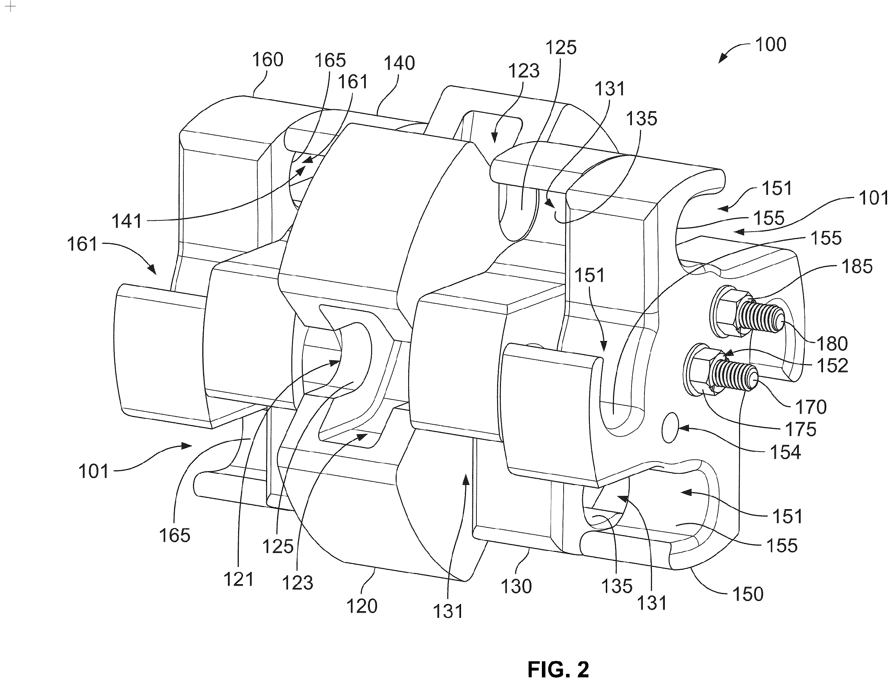

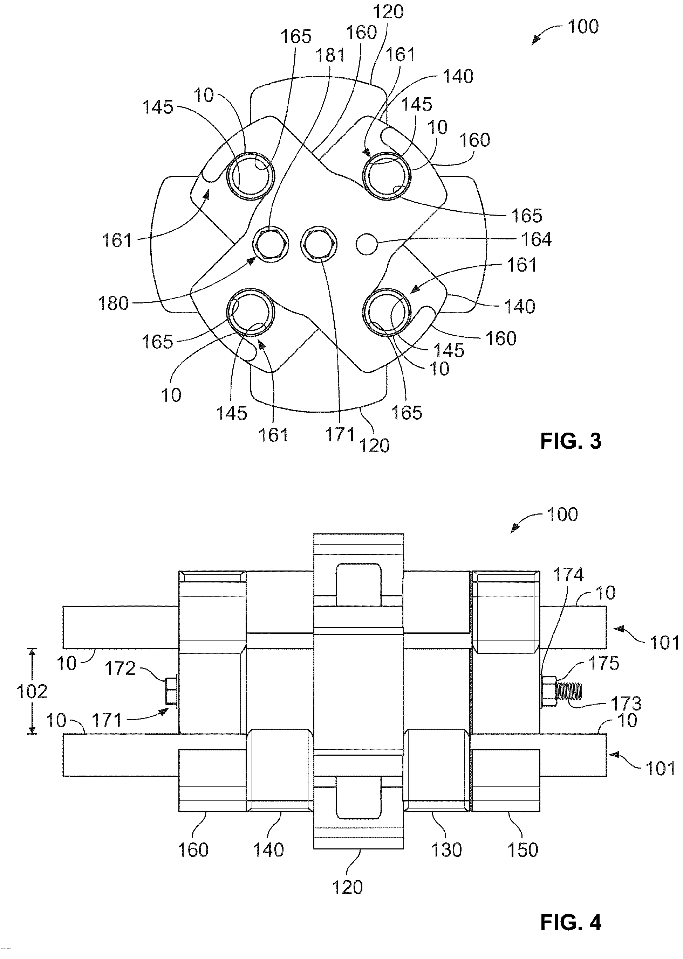

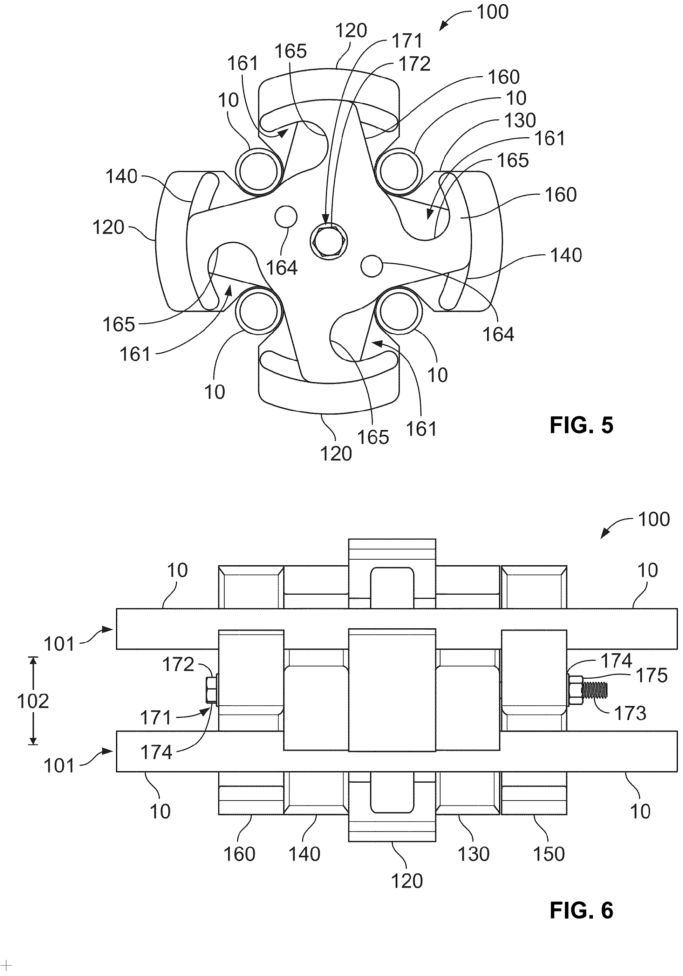

Figure 1 depicts a perspective view of an illustrative conduit separator assembly 100 in an unassembled state, according to one or more embodiments. Figure 2 depicts a perspective view of the conduit separator assembly 100 shown in Figure 1 in an assembled and closed configuration. Figures 3 and 4 depict an end elevation view and a side elevation view, respectively, of the conduit separator assembly 100 shown in Figure 1 in an assembled and closed configuration, according to one or more embodiments. Figures 5 and 6 depict an end elevation view and side elevation view, respectively, of a conduit separator assembly 100 similar to the conduit separator assembly 100 shown in Figures 3 and 4 in an assembled and open configuration, according to one or more embodiments. The main difference between the conduit separator assembly 100 shown in Figures 5 and 6 as compared to the conduit separator assembly 100 shown in Figures 3 and 4 and the conduit separator assembly 100 shown in Figures 5 and 6 is that the conduit separator assembly 100 shown in Figures 5 and 6 does not include a securing member 180 positioned within securing bores 164, 144, 124, 134, and 154 that are further described below with reference to Figures 1 and 2.

Referring to Figures 1-6 collectively, in some embodiments, the conduit separator assembly 100 can include a centralizer 120, a first outer part 130, and a second outer part 140. As also shown, the conduit separator assembly 100 can also include an optional third outer part 150 and/or an optional fourth outer part 160. The centralizer 120 can define a plurality of radial conduit slots 121 and the first outer part 130 and the second outer part 140 can each define a plurality of tangential conduit slots 131 and 141, respectively. If present, the optional third outer part 150 and and/or the fourth outer part 160 can also define a plurality of tangential conduit slots 151 and 161 respectively.

The centralizer 120 can define a plurality of semi-cylindrical surfaces 125 and the first outer part 130, the second outer part 140, the third outer part 150 (if present), and/or the fourth outer part 160 (if present) can each define a plurality of semi-cylindrical surfaces 135, 145, 155, 165 respectively. In some embodiments, the semi-cylindrical surfaces 125 can define an inner end or be located, disposed, or otherwise positioned toward the inner end of the radial conduit slots 121, and the semi-cylindrical surfaces 135, 145, 155, 165 can define an inner end or be located, disposed, or otherwise positioned toward the inner end of the tangential conduit slots 131, 141, 151, 161 respectively.

In some embodiments, the centralizer 120, the first outer part 130, the second outer part 140, the third outer part 150 (if present), and/or the fourth outer part 160 (if present) can each define a central bore therethrough 122, 132, 142, 152 and 162, respectively. In some embodiments, the conduit separator assembly 100 can include a central axle 170 that can be located, disposed, or otherwise positioned within the central bores 122, 132, 142, 152 and 162. Said another way, the centralizer 120, the first outer part 130, the second outer part 140, the third outer part 150 (if present), and/or the fourth outer part 160 (if present) can be located, disposed, or otherwise positioned about the central axle 170 such that, the centralizer 120, the first outer part 130, the second outer part 140, the third outer part 150 (if present), and/or the fourth outer part 160 (if present) can rotate about the central axle 170.

In some embodiments, each tangential conduit slot 131 of the first outer part 130 can be facing in the same direction as compared to a corresponding tangential conduit slot 141 of the second outer part 140 when the central axle 170 is disposed, located, or otherwise positioned within the central bore 122 of the centralizer 120, the central bore 132 of the first outer part 130, and the central bore 142 of the second outer part 140. Said another way, the semi-cylindrical surface 135 of the first outer part 130 and the semi-cylindrical surface 145 of the second outer part 140 can each be oriented in the same direction with respect to one another. The centralizer 120 can be disposed, located, or otherwise positioned between the first outer part 130 and the second outer part 140. In some embodiments, each tangential conduit slot 151 of the third outer part 150 can be facing toward a corresponding tangential conduit slot 131 of the first outer part 130 when the central axle 170 is disposed, located, or otherwise positioned within the central bore 152 of the third outer part 150 and the central bore 132 of the first outer part 130. Said another way, each tangential conduit slot 151 of the third outer part 150 can face in an opposite direction as a corresponding tangential conduit slot 131 of the first outer part 130 when the central axle 170 is positioned within the central bore 152 of the third outer part 150 and the central bore 132 of the first outer part 130. In some embodiments, each tangential conduit slot 161 of the fourth outer part 160 can be facing toward a corresponding tangential conduit slot 141 of the second outer part 140 when the central axle 170 is disposed, located, or otherwise positioned within the central bore 162 of the fourth outer part 160 and the central bore 142 of the second outer part 140. Said another way, each tangential conduit slot 161 of the fourth outer part 160 can face in an opposite direction as a corresponding tangential conduit slot 141 of the second outer part 140 when the central axle 170 is disposed, located, or otherwise positioned with the central bore 162 of the fourth outer part 160 and the central bore 142 of the second outer part 140.

In some embodiments, the centralizer 120, the first outer part 130, and the second outer part 140 can be disposed, located, or otherwise positioned, between the third outer part 150 and the fourth outer part 160, when the third outer part 150 and/or the fourth outer part 160 are/is present. In some embodiments, the first outer part 130, the second outer part 140, the third outer part 150 (if present), and the fourth outer part 160 (if present) can each rotate relative to the centralizer 120 about the central axle 170. The first outer part 130, the second outer part 140, the third outer part 150 (if present), and the fourth outer part 160 (if present) can each rotate between the closed position relative to the centralizer 120, as shown in Figures 3 and 4, and the open position relative to the centralizer 120, as shown in Figure 5 and 6.

In some embodiments, each radial conduit slot 121 of the centralizer 120 can be aligned with the corresponding tangential conduit slot 131 of the first outer part 130, the corresponding tangential conduit slot 141 of the second outer part 140, the corresponding tangential conduit slot 151 of the third outer part 150 (if present), and the corresponding tangential conduit slot 161 of the fourth outer part 160 (if present) to jointly or collectively define a plurality of conduit paths 101 through the conduit separator assembly 100 when the conduit separator assembly 100 is in the closed configuration. In some embodiments, when viewed from an end as shown in Figures 3 and 5, the conduit path 101 can appear to have a circular cross section.

In some embodiments, the central axle 170 can include cap screw 171 that has a first end 172 and a second end 173. In some embodiments, the central axle 170 can include at least one washer 174 (two are shown) and a nut 175 that can be threaded onto the second end 173 of the central axle 170 that can be configured to secure the centralizer 120, the first outer part 130, the second outer part 140, the third outer part 150 (if present), and the fourth outer part 160 (if present) to one another. In some other embodiments, not shown, the central axle 170 can be a threaded rod with a washer174 and a nut 175 disposed, located, or otherwise positioned or threaded onto the first end 172 of the central axle 170 and another washer 174 and another nut 175 disposed, located, or otherwise positioned or threaded onto the second end 173 of the central axle 170.

In some embodiments, when the conduit separator assembly 100 is in the closed configuration, as shown in Figures 3 and 4, a securing member 180 can be disposed, located, or otherwise positioned within a corresponding securing bore 164, 144, 124, 134, and 154. In some embodiments, the securing member 180 can be a cap screw 181 that can include at least one washer 184 (two are shown) and a nut 185 that can be threaded onto a second end 183 of the securing member 180. When the conduit separator 100 is in the closed configuration and the securing member 180 is positioned within the securing bores 164, 144, 124, 134, and 154, the conduit separator 100 can be maintained in the closed configuration. Said another way, the securing member 180 can prevent the conduit separator 100 from moving or otherwise being reconfigured from the closed position to the open position when the conduit separator 100 is in the closed configuration and the securing member 180 is disposed within the securing bores 164, 144, 124, 134, and 154.

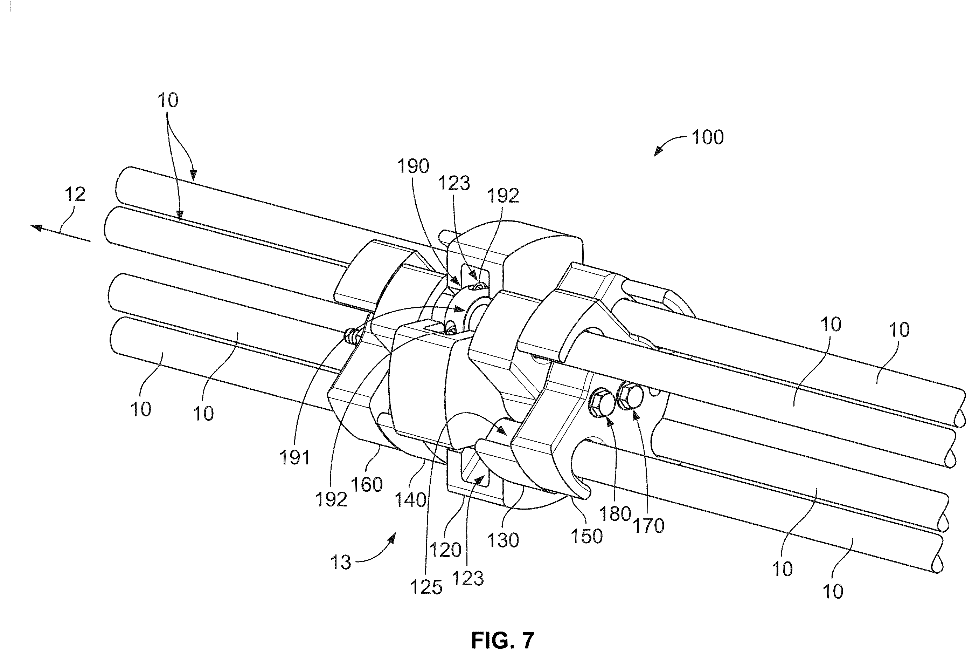

Figure 7 depicts a perspective view of the conduit separator assembly 100 positioned about a plurality of conduits 10 and that can include one or more conduit clamps 190. In some embodiments, the centralizer 120 can define at least one clamp slot 123. In some embodiments, the clamp slot 123 can extend completely through the centralizer 120. In other embodiments, the clamp slot 123 can extend partially through the centralizer 120. In some embodiments, the conduit clamp 190 can be secured on, about, or otherwise positioned at least partially around one of the plurality of conduits 10. In some embodiments, the conduit clamp 190 can include at least two parts, for example two half clamps 191 (one half clamp is shown in Figure 7) that can be secured to one another via at least one fastener 192 (two are shown). In other embodiments, the conduit clamp 190 can include a hinged or "clam shell" type body that can include mating ends or sides that can be secured to one another via the at least one fastener 192. In some embodiments, the conduit clamp 190 can be secured to one of the conduits 10 such that the conduit clamp 190 can be rigidly connected to the conduit 10 in a direction parallel to a longitudinal axis 12 of the conduit separator assembly 100. In some embodiments, the conduit clamp 190 can be free to at least partially rotate relative to or about the conduit 10. In some embodiments, the clamp slot 123 defined by the centralizer 120 and at least one of the radial conduit slots 121 (see, e.g., Figures 1 and 2) defined by the centralizer 120 can intersect one another. The clamp slot 123 defined by the centralizer 120 can be configured to receive the conduit clamp 190 when the conduit clamp 190 is secured to the conduit 10, or said another way, the conduit clamp 190 can be at least partially positioned within the clamp slot 123 and the conduit 10 can be at least partially positioned within the radial conduit slot 121 and adjacent to the semi-cylindrical surface 125 such that the centralizer 120 can be restrained or constrained from moving relative to the conduit 10 in the direction that is parallel to the longitudinal axis 12.

In some embodiments, when the first outer part 130, the second outer part 140, the third outer part 150 (if present) and the fourth outer part 160 (if present) are in the open position relative to the centralizer 120, one conduit 10 can be positioned within each corresponding radial conduit slot 121 of the centralizer 120. In some embodiments, it should be understood that less than all of the radial conduit slots 120 of the centralizer 120 can be free from or otherwise not include a conduit 10 positioned therein. In some embodiments, when the conduit 10 is positioned within the corresponding radial conduit slot 121 defined by the centralizer 120, the first outer part 130, the second outer part 140, the third outer part 150 (if present) and the fourth outer part 160 (if present) can be moved to the closed position relative to the centralizer 120 to constrain or restrain each conduit 10 within a corresponding conduit path 101 defined by the centralizer 120, the first outer part 130, the second outer part 140, the third outer part 150 (if present), and the fourth outer part 160 (if present). In some embodiments, the centralizer 120, the first outer part 130, the second outer part 140, the third outer part 150 (if present), and the fourth outer part 160 (if present) can jointly restrict a movement of the conduit(s) 10 disposed, located, or otherwise positioned within the conduit path 101 in a radial direction 13.

In some embodiments, as noted above, the centralizer 120, the first outer part 130, the second outer part 140, the third outer part 150 (if present), and the fourth outer part 160 (if present) can each define a securing bore therethrough 124, 134, 144, 154, and 164. In some embodiments, as also noted above, when the first outer part 130, the second outer part 140, the third outer part 150 (if present), and the fourth outer part 160 (if present) are in the closed position relative to the centralizer 120, the securing bores 124, 134, 144, 154, and 164 defined by the centralizer 120, the first outer part 130, the second outer part 140, the third outer part 150 (if present), and the fourth outer part 160 (if present) can be aligned with one another such that a securing member 180 can be positioned within the securing bores 164, 144, 124, 134, and 154.

In some embodiments, the securing member 180 can include a cap screw 181 that can have a first end 182 and a second end 183. In some embodiments, the securing member 180 can include at least one washer 184 (two are shown) and a nut 185 that can be threaded onto the second end 183 of the securing member 180 that can be configured to secure the centralizer 120, the first outer part 130, the second outer part140, the third outer part150 (if present), and the fourth outer part 160 (if present) to one another such that the first outer part 130, the second outer part 140, the third outer part 150 (if present), and the fourth outer part 160 (if present) can be secured in the closed position or assembled state relative to the centralizer 120. In some other embodiments, not shown, the securing member 180 can be a threaded rod with a washer and a nut positioned or threaded onto the first end 182 of the securing member 180 and positioned or threaded onto the second end 183 of the securing member 180.

In some embodiments, the conduit separator assembly 100 can be configured to maintain a separation distance 102 (see Figures 4 and 6) between adjacent conduits 10. The conduit separator assembly 100 can be configured such that each conduit 10 can be disposed, located, or otherwise positioned within a corresponding conduit path 101. The conduit separator assembly100 can be configured such that at least one of the conduits 10 can move relative to the conduit separator assembly 100 in a direction that is parallel with the longitudinal axis 12. In some embodiments, the conduit separator assembly 100 can be configured such that each conduit 10 can be constrained or restrained relative to the separator assembly 100 in a radial direction 13 or said another way, that is normal or perpendicular to the longitudinal axis 12. In some embodiments, the conduit separator assembly 100 can be configured to maintain adjacent fluid conduits 10 separated from each other by the separation distance 102 as best seen on Figures 4 and 6. In some embodiments, the separation distances 102 between adjacent conduits 10 can be equal to one another. In other embodiments, the separation distances 102 between adjacent conduits 10 can vary or otherwise be different with respect to one another. In still other embodiments, the separation distances 102 between any two adjacent conduits 10 can be equal to one another and the separation distance 102 between any two other adjacent conduits 10 can vary or otherwise be different with respect to one another.

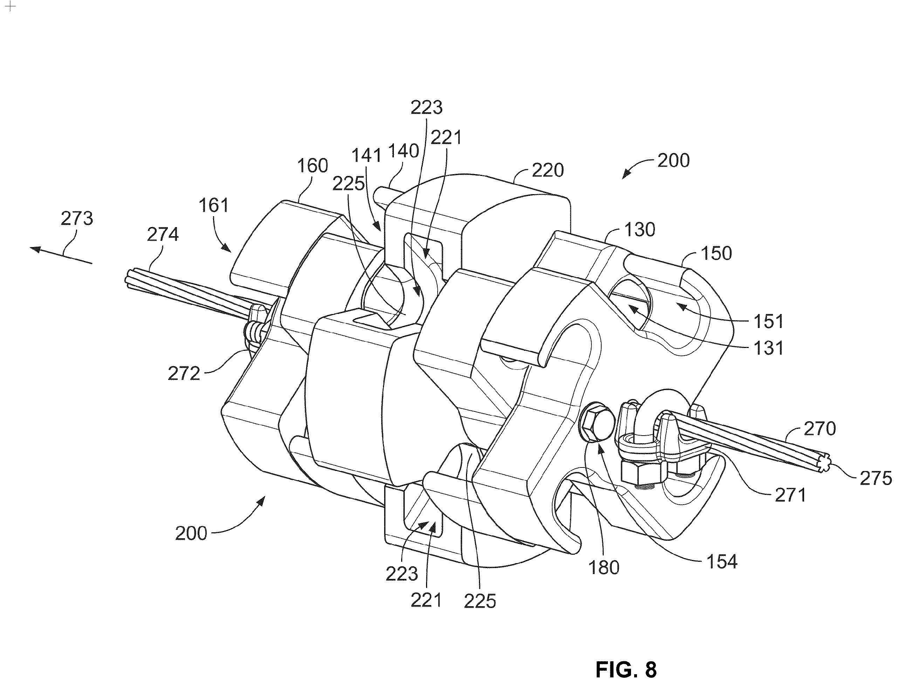

Figure 8 depicts a perspective view of another illustrative conduit separator assembly 200, according to one or more embodiments. In some embodiments, the conduit separator assembly 200 can include a centralizer 220, the first outer part 130, the second outer part 140, the optional third outer part 150, and the optional fourth outer part 160. In some embodiments, the centralizer 220 can define a central bore therethrough, (not visible in Figure 8 but similar to the central bore 122 defined by the centralizer 120), one or more securing bores therethrough (not visible in Figure 8 but similar to the securing bores 124 defined by the centralizer 120), and a plurality of radial conduit slots 221. In some embodiments, the centralizer 220 can define at least one clamp slot 223. In other embodiments, not shown the centralizer 220 can be free of the at least one clamp slot 223. In some embodiments, the centralizer 220 can define a plurality of radial conduit slots 221 and a plurality of semi-cylindrical surfaces 225 that can be similar to the radial slots 121 and the semi-cylindrical surfaces 125, respectively, of the centralizer 120 shown in Figure 1.

In some embodiments, a securing member 180, e.g., the securing member described above with reference to the conduit separator assembly 100, can be configured to be disposed, located, or otherwise positioned within the securing bore defined by the centralizer 220, the securing bore 134 defined by the first outer part 130, the securing bore 144 defined by the second outer part 140, the securing bore 154 defined by the third outer part 150 (if present), and the securing bore 164 defined by the fourth outer part 160 (if present). In some embodiments, the central bore defined by the centralizer 220, the central bore 132 defined by the first outer part 130, the central bore 142 defined by the second outer part 140, the central bore 152 defined by the third outer part 150 (if present), and the central bore 162 defined by the fourth outer part 160 can be configured to receive an elongated central member 270. Said another way, the centralizer 220, the first outer part 130, the second outer part 140, the third outer part 150 (if present), and the fourth outer part 160 (if present) can be configured such that the elongated central member 270 can be disposed, located, or otherwise positioned within the central bore defined by the centralizer 220, the central bore 132 defined by the first outer part 130, the central bore 142 defined by the second outer part 140, the central bore 152 defined by the third outer part 150 (if present), and the central bore 162 defined by the fifth outer part 160 (if present).

In some embodiments, the conduit separator assembly 200 can further include one or more clamps, e.g., a first clamp 271 and a second clamp 272, as shown in Figure 8. The elongated central member 270 can be disposed, located, or otherwise positioned within the central bore defined by the centralizer 220, the central bore 132 defined by the first outer part 130, the central bore 142 defined by the second outer part140, the central bore 152 defined by the third outer part 150 (if present), and the central bore 162 defined by the fourth outer part 160 (if present). In some embodiments, the first clamp 271 and the second clamp 272 can be secured or otherwise coupled to the elongated central member 270. In some embodiments, the elongated central member 270 can be a chain, a wire rope, a cable, a synthetic rope, a metallic tubular member, a metallic rod, or any combination thereof. In some embodiments, the first clamp 271 and the second clamp 272 can each be a cable clamp (as shown). The centralizer 220, the first outer part 130, the second outer part 140, the third outer part 150 (if present), and the fourth outer part 160 (if present) can be positioned between the first clamp 271 and the second clamp 272 such that the centralizer 220, the first outer part 130, the second outer part 140, the third outer part 150 (if present), and the fourth outer part 160 (if present) can be fixed or restrained relative to the elongated central member 270 in a longitudinal direction 273 of the elongated central member 270.

In some embodiments, not shown, the elongated central member 270 can include an eye, an eye splice, or a socket disposed, located, or otherwise positioned on or formed on a first end 274 and a second end 275 of the elongated central member 270. The centralizer 220, the first outer part 130, the second outer part 140, the third outer part 150 (if present), and the fourth outer part 160 (if present) can be disposed, located, or otherwise positioned toward the first end 274 or the second end 275 of the elongated central member 270.

In some embodiments, the conduits 10 can independently be a tube, e.g., a steel or stainless steel tube, a polymer or plastic tube, an electric cable, or a fiber optic cable. In some embodiments, the centralizer 120 or 220, the first outer part 130, the second outer part 140, the third outer part 150 (if present), and the fourth outer part 160 (if present) can independently be formed or manufactured from a polymer or plastic material a metallic material, e.g., steel or stainless steel, a composite material, e.g., carbon fiber, wood, or any other material or combination of materials.

A process for securing a plurality of conduits at a distance from one another is provided. In some embodiments, the process can include obtaining the conduit separator assembly 100 or 200, positioning the first outer part 130, the second outer part 140, and optionally the third outer part 150 and/or optionally the fourth outer part 160 in the open position relative to the centralizer 120 or 220. At least one conduit, e.g., a plurality of conduits 10, can be positioned within a corresponding radial slot 121 defined by the centralizer 120 or 220. The first outer part 130, the second outer part 140, the third outer part 150 (if present), and the fourth outer part 160 (if present) can be moved from the open position to the closed position relative to the centralizer 120 or 220.

In some embodiments, the central axle 170 or the elongated central member 270 can be positioned within the central bore 122 of the centralizer 120 or the central bore (not shown) of the centralizer 220 and the central bores 132, 142, 152 (if the third outer part 150 is present) and the central bore 162 (if the fourth outer part 160 is present) to secure the centralizer 120 or 220, the first outer part 130, the second outer part 140, the third outer part 150 (if present), and the fourth outer part 160 (if present) to one another. In some embodiments, the process can include positioning the securing member 180 within the securing bore 124 of the centralizer 120 or the central bore (not shown) of the centralizer 220) and the central bores 134, 144, 154 (if the third outer part 150 is present), and the central bore 164 (if the fourth outer part 160 is present). In some embodiments, the process can include securing the conduit clamp 190 onto one of the plurality of conduits 10, positioning the conduit clamp 190 within the radial clamp slot 123 of the centralizer 120. In other embodiments, the process can include disposing the elongated central member 270 within the central bores defined by the centralizer 220 and securing the first and second clamps 271, 272 to the elongated central member 270.

The present disclosure further relates to any one or more of the following embodiments:
A1. A conduit separator assembly that can include a centralizer that defines a plurality of radial conduit slots; a first outer part that defines a plurality of tangential conduit slots; a second outer part that defines a plurality of tangential conduit slots; and a central axle positioned within a central bore defined by the centralizer, a central bore defined by the first outer part, and a central bore defined by the second outer part, wherein, the centralizer is positioned between the first outer part and the second outer part.
A2. The conduit separator assembly of paragraph A1, wherein the first outer part and the second outer part are rotatable with respect to the centralizer about the central axle between an open position and a closed position.
A3. The conduit separator assembly of paragraph A1 or A2, further comprising a conduit clamp configured to be secured to a conduit, wherein the centralizer defines a clamp slot at least partially therethrough configured to receive the conduit clamp.
A4. The conduit separator assembly of any one of paragraphs A1 to A3, wherein when the first outer part and the second outer part are in the closed position relative to the centralizer, the centralizer, the first outer part and the second outer part jointly define a plurality of conduit paths configured to restrain a corresponding plurality of conduits.
A5. The conduit separator assembly of any one of paragraphs A1 to A4, wherein the conduit separator assembly restricts a movement of each conduit in the plurality of conduits positioned within each conduit path in a direction that is normal to a longitudinal axis of the central axle.
A6. The conduit separator assembly of any one of paragraphs A1 to A5, further comprising a securing member configured to be positioned within a securing bore defined by the centralizer, a securing bore defined by the first outer part and a securing bore defined by second outer part.
A7. The conduit separator assembly of any one of paragraphs A1 to A6, wherein, when the first outer part and the second outer part are in the open position relative to the centralizer, a conduit can be positioned within each radial conduit slot defined by the centralizer.
A8. The conduit separator assembly of any one of paragraphs A1 to A7, wherein the plurality of tangential conduit slots defined by first outer part and plurality of tangential conduit slots defined by the second outer part are facing one another.
A9. The conduit separator assembly of any one of paragraphs A1 to A8, further comprising a third outer part and a fourth outer part each defining a tangential conduit slot, each defining a central bore therethrough, and each defining a securing bore therethrough, wherein: the centralizer, the first outer part, and the second outer part are positioned between the third outer part and the fourth outer part; the central axle is positioned within the central bore defined by the third outer part and the central bore defined by the fourth outer part, and the securing member is configured to be positioned within the securing bore defined by the third outer part and the securing bore defined by the fourth outer part.
A10. The conduit separator assembly of any one of paragraphs A1 to A9, wherein, the third outer part and the fourth outer part are configured to be rotatable relative to the centralizer about the central axle between the open position and the closed position.
A11. The conduit separator assembly of any one of paragraphs A1 to A10, wherein, when the first outer part, the second outer part, the third outer part, and the fourth outer part are in the closed position relative to the centralizer, the centralizer, the first outer part, the second outer part, the third outer part, and the fourth outer part define the plurality of conduit paths therethrough.
A12. The conduit separator assembly of any one of paragraphs A1 to A11, wherein, when the first outer part, the second outer part, the third outer part, and the fourth outer part are in the open position relative to the centralizer, a conduit can be positioned within each radial conduit slot defined by the centralizer.
A13. The conduit separator assembly of any one of paragraphs A1 to A12, wherein each tangential slot defined by the third outer part is facing a corresponding tangential slot defined by the first outer part, and each tangential slot defined by the fourth outer part is facing a corresponding tangential slot defined by the second outer part.
A14. The conduit separator assembly of any one of paragraphs A1 to A13, wherein: the central axle comprises a first threaded end, a second threaded end, a first nut and a second nut, and the first nut is secured on the first threaded end thereof and the second nut is secured on the second threaded end thereof.
A15. The conduit separator assembly of any one of paragraph A1 to A6, comprising a third outer part and a fourth outer part, wherein the securing member comprises a first threaded end, a second threaded end, a first nut and a second nut, the first nut is configured to be secured on the first threaded end of the securing member and the second nut is configured to be secured on the second threaded end of the securing member, when the securing member is positioned within the securing bore defined by the centralizer, the securing bore defined by the first outer part, the securing bore defined by second outer part, the securing bore defined by the third outer part, and the securing bore defined by the fourth outer part, and the first nut is secured to the first threaded end of the securing member and the second nut is secured to the second threaded end of the securing member, the conduit separator assembly is secured in a closed configuration.
B1. A conduit separator assembly, comprising: a centralizer that defines a plurality of radial conduit slots; a first outer part that defines a plurality of tangential conduit slots; a second outer part that defines a plurality of tangential conduit slots; and a securing member, wherein the centralizer, the first outer part and the second outer part each define a central bore therethrough and a securing bore therethrough, the securing member is configured to be positioned within the securing bore defined by the centralizer, within the securing bore defined by the first outer part, and within the securing bore defined by the second outer part, and the central bore defined by the centralizer, the central bore defined by the first outer part, and the central bore defined by the second outer part are configured to receive an elongated central member therethrough.
B2. The conduit separator assembly paragraph B1, further comprising the elongated central member, a first clamp and a second clamp, wherein the elongated central member is positioned within the central bore defined by the centralizer, the central bore defined by the first outer part and the central bore defined by the second outer part, the first clamp and the second clamp are secured to the elongated central member; and the centralizer, the first outer part and the second outer part are positioned between the first clamp and the second clamp such that the centralizer, the first outer part and the second outer part are fixed relative to the elongated central member in a longitudinal direction of the elongated central member.
C1. A process for securing a plurality of conduits at a distance from one another with a conduit separator assembly, comprising obtaining a conduit separator assembly, wherein the conduit separator assembly comprises a centralizer that defines a plurality of radial conduit slots, a first outer part that defines a plurality of tangential conduit slots, a second outer part that defines a plurality of tangential conduit slots, and a central axle positioned within a central bore defined by the centralizer, a central bore defined by the first outer part, and a central bore defined by the second outer part, wherein, the centralizer is positioned between the first outer part and the second outer part; positioning each conduit within corresponding radial conduit slots defined by the centralizer; and positioning the first outer part and the second outer part in a closed position relative to the centralizer.
C2. The process of paragraph C1, wherein the conduit separator assembly further comprises a securing member configured to be positioned within a securing bore defined by the centralizer, a securing bore defined by the first outer part and a securing bore defined by second outer part; further comprising and positioning the securing member within the securing bore defined by the centralizer, securing bore defined by the first outer part and securing bore defined by the second outer part.
C3. The process of paragraph C1 or C2, wherein the conduit separator assembly further comprises a conduit clamp configured to be secured to one conduit in the plurality of conduits and the centralizer defines a clamp slot at least partially therethrough configured to receive the conduit clamp; further comprising securing the conduit clamp to one of the plurality of conduits; and positioning the centralizer such that the conduit clamp is positioned within the clamp slot.

Certain embodiments and features have been described using a set of numerical upper limits and a set of numerical lower limits. It should be appreciated that ranges including the combination of any two values, e.g., the combination of any lower value with any upper value, the combination of any two lower values, and/or the combination of any two upper values are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim can be not defined above, it should be given the broadest definition persons in the pertinent art have given that term as reflected in at least one printed publication or issued patent. Furthermore, all patents, test procedures, and other documents cited in this application are fully incorporated by reference to the extent such disclosure can be not inconsistent with this application and for all jurisdictions in which such incorporation can be permitted.

While certain preferred embodiments of the present invention have been illustrated and described in detail above, it can be apparent that modifications and adaptations thereof will occur to those having ordinary skill in the art. It should, therefore, be expressly understood that such modifications and adaptations may be devised without departing from the basic scope thereof, and the scope thereof can be determined by the claims that follow.

## Claims

1. A conduit separator assembly, comprising:
a centralizer that defines a plurality of radial conduit slots;
a first outer part that defines a plurality of tangential conduit slots;
a second outer part that defines a plurality of tangential conduit slots; and
a central axle positioned within a central bore defined by the centralizer, a central bore defined by the first outer part, and a central bore defined by the second outer part, wherein the centralizer is positioned between the first outer part and the second outer part.

2. The conduit separator assembly of claim 1, wherein the first outer part and the second outer part are rotatable with respect to the centralizer about the central axle between an open position and a closed position.

3. The conduit separator assembly of claim 2, further comprising a conduit clamp configured to be secured to a conduit, wherein the centralizer defines a clamp slot at least partially therethrough configured to receive the conduit clamp.

4. The conduit separator assembly of claim 3, wherein when the first outer part and the second outer part are in the closed position relative to the centralizer, the centralizer, the first outer part and the second outer part jointly define a plurality of conduit paths configured to restrain a corresponding plurality of conduits.

5. The conduit separator assembly of claim 4, wherein the conduit separator assembly restricts a movement of each conduit in the plurality of conduits positioned within each conduit path in a direction that is normal to a longitudinal axis of the central axle.

6. The conduit separator assembly of claim 5, further comprising a securing member configured to be positioned within a securing bore defined by the centralizer, a securing bore defined by the first outer part and a securing bore defined by second outer part.

7. The conduit separator assembly of claim 6, wherein, when the first outer part and the second outer part are in the open position relative to the centralizer, a conduit can be positioned within each radial conduit slot defined by the centralizer.

8. The conduit separator assembly of claim 7, wherein the plurality of tangential conduit slots defined by first outer part and plurality of tangential conduit slots defined by the second outer part are facing one another.

9. The conduit separator assembly of claim 7, further comprising a third outer part and a fourth outer part each defining a central bore therethrough, a securing bore therethrough, and a plurality of tangential slots, wherein:
the centralizer, the first outer part, and the second outer part are positioned between the third outer part and the fourth outer part;
the central axle is positioned within the central bore defined by the third outer part and the central bore defined by the fourth outer part, and
the securing member is configured to be positioned within the securing bore defined by the third outer part and the securing bore defined by the fourth outer part.

10. The conduit separator assembly of claim 9, wherein the third outer part and the fourth outer part are configured to be rotatable relative to the centralizer about the central axle between the open position and the closed position.

11. The conduit separator assembly of claim 10 wherein, when the first outer part, the second outer part, the third outer part, and the fourth outer part are in the closed position relative to the centralizer, the centralizer, the first outer part, the second outer part, the third outer part, and the fourth outer part define the plurality of conduit paths therethrough.

12. The conduit separator assembly of claim 6, further comprising a third outer part and a fourth outer part, wherein:
the securing member comprises a first threaded end, a second threaded end, a first nut and a second nut,
the first nut is configured to be secured on the first threaded end of the securing member and the second nut is configured to be secured on the second threaded end of the securing member,
when the securing member is positioned within the securing bore defined by the centralizer, the securing bore defined by the first outer part, the securing bore defined by second outer part, the securing bore defined by the third outer part, and the securing bore defined by the fourth outer part, and
the first nut is secured to the first threaded end of the securing member and the second nut is secured to the second threaded end of the securing member, the conduit separator assembly is secured in a closed configuration.

13. A process for securing a plurality of conduits at a distance from one another with a conduit separator assembly, comprising:
obtaining a conduit separator assembly, wherein the conduit separator assembly comprises a centralizer that defines a plurality of radial conduit slots, a first outer part that defines a plurality of tangential conduit slots, a second outer part that defines a plurality of tangential conduit slots, and a central axle positioned within a central bore defined by the centralizer, a central bore defined by the first outer part, and a central bore defined by the second outer part, wherein, the centralizer is positioned between the first outer part and the second outer part;
positioning each conduit within corresponding radial conduit slots defined by the centralizer; and
positioning the first outer part and the second outer part in a closed position relative to the centralizer.

14. The process of claim 18, wherein the conduit separator assembly further comprises a securing member configured to be positioned within a securing bore defined by the centralizer, a securing bore defined by the first outer part and a securing bore defined by second outer part; further comprising and positioning the securing member within the securing bore defined by the centralizer, securing bore defined by the first outer part and securing bore defined by the second outer part.

15. The process of claim 19, wherein the conduit separator assembly further comprises a conduit clamp configured to be secured to one conduit in the plurality of conduits and the centralizer defines a clamp slot at least partially therethrough configured to receive the conduit clamp; further comprising:
securing the conduit clamp to one of the plurality of conduits; and
positioning the centralizer such that the conduit clamp is positioned within the clamp slot.
